# EUROPÄISCHE PATENTANMELDUNG

(11) **EP 1 405 711 A2**
(43) Veröffentlichungstag der Anmeldung: **07.04.2004**
(21) Anmeldenummer: 03021669.1
(22) Anmeldetag: 29.09.2003
(51) Int. Cl.: B29C 65/06

(54) **Einrichtung zum Verschweissen zweier thermoplastischer Formteile**

(30) Priorität: 01.10.2002 DE 10245904
(71) Anmelder: MANN+HUMMEL GmbH, 71638 Ludwigsburg (DE)
(72) Erfinder: Kienel, Jürgen, 96523 Steinach (DE); Fritsch, Josef, 74385 Pleidesheim (DE); Lämmemeier, Erwin, 71640 Ludwigsburg (DE); Slansky, Jürgen, 96524 Lindenberg (DE); Ellmer, Egon, 96524 Weidhausen (DE)
(74) Vertreter: Voth, Gerhard, Dipl.-Ing.

(57) **Zusammenfassung**

Die Erfindung betrifft eine Einrichtung zum Verschweißen wenigstens zweier thermoplastischer Formteile mit einer Aufnahme für das erste thermoplastische Formteil (12). Es ist eine weitere Aufnahme für das zweite thermoplastische Formteil (17) vorgegeben, wobei die weitere Aufnahme mittels eines Schwingkopfes (14) in Schwingung versetzt wird zum Vibrationsverschweißen der beiden thermoplastischen Formteile.Die weitere Aufnahme weist eine Fixiereinheit auf welche einen Schweißstempel (20) aufnimmt der sich über einen Teilbereich der zu verschweißenden Fläche erstreckt.

## Beschreibung

### Stand der Technik

Die Erfindung betrifft eine Einrichtung zum Verschweißen zweier thermoplastischer Formteile. Dieses Verschweißen erfolgt üblicherweise im Vibrationsschweißverfahren, wobei wenigstens ein Teil in einer Haltevorrichtung gelagert ist und das weitere Teil über einen Schwingkopf zum Schwingen angeregt wird und durch die Schwingung bzw. die Reibung zwischen den beiden Teile ein Verschweißen erfolgt.

Aus dem DE U 94 02 316 ist ein Verfahren bzw. eine Vorrichtung zum Verschweißen von Rahmen aus Kunststoff bekannt. Die Sonotrode kann sowohl in Längsrichtung schwingen als auch in Querrichtung um ein Verschweißen bestimmter Elemente in unterschiedlichen Positionen zu ermöglichen.

Es ist ferner aus der DE 39 34 062 ein Werkzeug zum Vibrationsschweißen bekannt, welches nicht nur für den Schweißvorgang geeignet ist sondern auch eine zusätzliche Trägerplatte vorgesehen ist, die mit einer Schneideinrichtung ausgestattet ist. Der Schweißstempel ist gegenüber der Trägerplatte und damit der Schneideinrichtung verschiebbar angeordnet. Durch diese Einrichtung erfolgt ein Verschweißen von Bauteilen und gleichzeitig ein Beschneiden dieser vorgefertigten Teile. Normalerweise ist die zu verschweißende Fläche mit dem Schweißstempel zugänglich. Bei komplizierten Bauteilen, wie beispielsweise Rohranschlüsse, Anschlußstutzen oder besondere Ausformungen aufweisen kann die Schweißfläche zumindest teilweise in gewissen Teilbereichen durch solche Ausformungen verdeckt und daher für den Schweißstempel nicht zugänglich sein. Bisher wurde versucht, durch konstruktiv geeignete Lösungen diese Problematik zu umgehen oder die Schweißfläche soweit zu verlagern, dass der Schweißstempel diese ausreichend kontaktieren kann. Dies führe jedoch zu einem erhöhten Materialbedarf und damit zu höheren Produktionskosten.

Der Erfindung liegt die Aufgabe zugrunde, die genannten Nachteile zu vermeiden und eine Einrichtung zum Verschweißen zweier thermoplastischer Formteile zu schaffen, welche geeignet ist auch komplizierte Formteile, bei denen die Schweißflächen nicht ohne weiteres dem Schweißstempel zugänglich sind, zuverlässig zu verschweißen. Diese Aufgabe wird durch die kennzeichnenden Merkmale des unabhängigen Anspruchs 1 gelöst.

### Vorteile der Erfindung

Der wesentliche Vorteil der Erfindung liegt darin, dass die weitere Aufnahme, dass heißt der Schweißstempel derart gestaltet ist, dass dort ein Schweißstempeleinsatz angeordnet werden kann, welcher unter Anschlußstutzen oder Ähnliches greift. In diesem Bereich erfolgt die Verschweißung unter diesem Schweißstempeleinsatz.

In einer vorteilhaften Ausgestaltung der Erfindung ist der Schweißstempeleinsatz beweglich an der ersten Aufnahme angeordnet, daß heißt dort ist eine Lagervorrichtung vorgesehen die geeignet ist, den Schweißstempeleinsatz dem Schweißstempel bzw. der weiteren Aufnahme zuzuführen und auch beim Öffnen des Werkzeuges zu entfernen.

Weiterbildungsgemäß weist die Lagervorrichtung eine Verschiebeeinrichtung auf, beispielsweise ein Linearantrieb und wird über die Maschinensteuerung der Fixiereinheit zugeführt, bzw. aus der Fixiereinheit entnommen. Der Linearantrieb kann beispielsweise ein Elektromotor mit einer Antriebsspindel sein, es besteht auch die Möglichkeit, eine pneumatische oder hydraulische Antriebseinrichtung vorzusehen. Zur Entkopplung der Vibration der Schweißeinrichtung von der ersten Aufnahme ist vorgesehen, den Schweißstempel axialtolerant mit der Lagervorrichtung zu verbinden. Die Vibration wirkt sich damit nicht auf den Linearantrieb aus.

Zur starren Verbindung des Schweißstempeleinsatzes mit dem gesamten Schweißstempel ist die Fixiereinheit mit einer Öffnung versehen. Der Schweißstempel ist im Bereich der Fixiereinheit kegelförmig ausgestaltet, so dass eine spielfreie Verbindung für den Schweißvorgang geschaffen wird die außerdem eine hohe Steifigkeit aufweist.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: die schematische Darstellung einer Vibrationsschweißeinrichtung,
- Figur 2: eine Detailansicht der Schweißeinrichtung,
- Figur 3 a-c: eine Ansicht des Schweißstempeleinsatzes in verschiedenen Positionen.

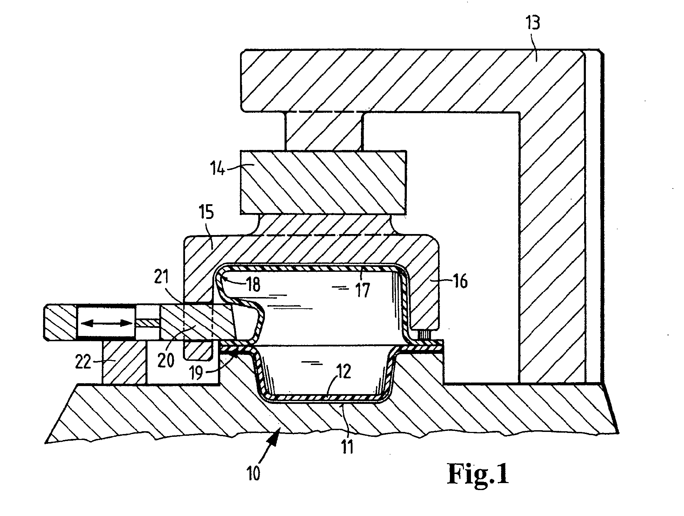

Figur 1 zeigt eine Einrichtung zum Verschweißen von thermoplastischen Formteilen als Vibrationsschweißanlage mit einem Tisch 10, welcher eine Aufnahme 11 für ein erstes thermoplastisches Formteil 12 aufweist. An dem Tisch 10 ist ein Ständer 13 befestigt der mit einem Schwingkopf 14 ausgestattet ist. An dem Schwingkopf 14 ist eine weitere Aufnahme mit einem Schweißstempel 16 befestigt. In dieser Aufnahme wird das zweite thermoplastische Formteil 17 für den Schweißvorgang fixiert. Bei der Verschweißung komplizierter Strukturen muss gewährleistet sein, dass der Schweißstempel sich über die gesamte Länge der Schweißnaht erstreckt. In dem dargestellten Beispiel weist das Formteil 17 eine Ausbuchtung 18 auf die verhindert, dass der Schweißstempel die linksseitige Schweißverbindungsfläche erreicht. Damit auch in diesem Bereich eine zuverlässige Schweißverbindung gewährleistet ist, wird ein Schweißstempeleinsatz 20 in eine Aufnahme 21 eingeschoben. Der Schweißstempeleinsatz 20 ist derart ausgestaltet, dass er in dem Bereich der Ausbuchtung 18 die Verschweißung im Bereich 19 zwischen den beiden thermoplastischen Formteilen gewährleistet. Der Schweißstempeleinsatz 20 ist über einen Träger 22 an dem Tisch 10 befestigt und axial beweglich.

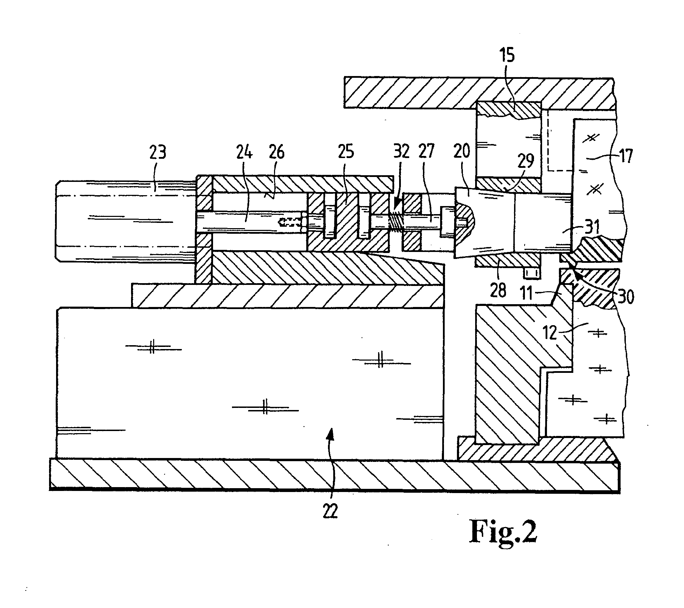

Figur 2 zeigt eine Detaildarstellung dieses Schweißstempeleinsatzes bzw. der Befestigung und Funktionsweise des Systems. Gleiche Teile sind mit gleichen Bezugszeichen versehen. Auf dem Träger 22 ist ein Linearantrieb beispielsweise ein Elektromotor 23 befestigt, dieser weist eine Antriebsspindel 24 auf. An der Antriebsspindel befindet sich ein Schieber 25, welcher von der Antriebsspindel in einer Führung 26 bewegt werden kann. Der Schieber trägt am rechtsseitigen Ende eine Schub- und Zugstange 27, welche mit dem Schweißstempeleinsatz 20 starr verbunden ist. Der Schweißstempeleinsatz 20 besitzt eine konische Außenfläche und ist in einer Fixiereinheit 28 gelagert, dass heißt dort in einer Kegelbohrung oder eine kegeligen Öffnung 29 für den Schweißvorgang befestigt. Die Schweißverbindung 30 zwischen dem Formteil 12 und dem Formteil 17 liegt zwischen der Aufnahme 11 und der Vorderkante 31 des Schweißstempeleinsatzes. Bei einer Vibrationsbewegung der Aufnahme 15 führt der Schweißstempeleinsatz 20 ebenfalls diese Bewegung aus, damit eine Verschweißung der beiden Formteile erfolgen kann. Der Schweißstempeleinsatz 20 ist mittels eines Entkopplungselements 32 von dem E-Motor vibrationsentkoppelt, damit wird eine Übertragung der Schwingung auf andere nicht an dem Schweißvorgang beteiligten Bauteilen wirksam verhindert.

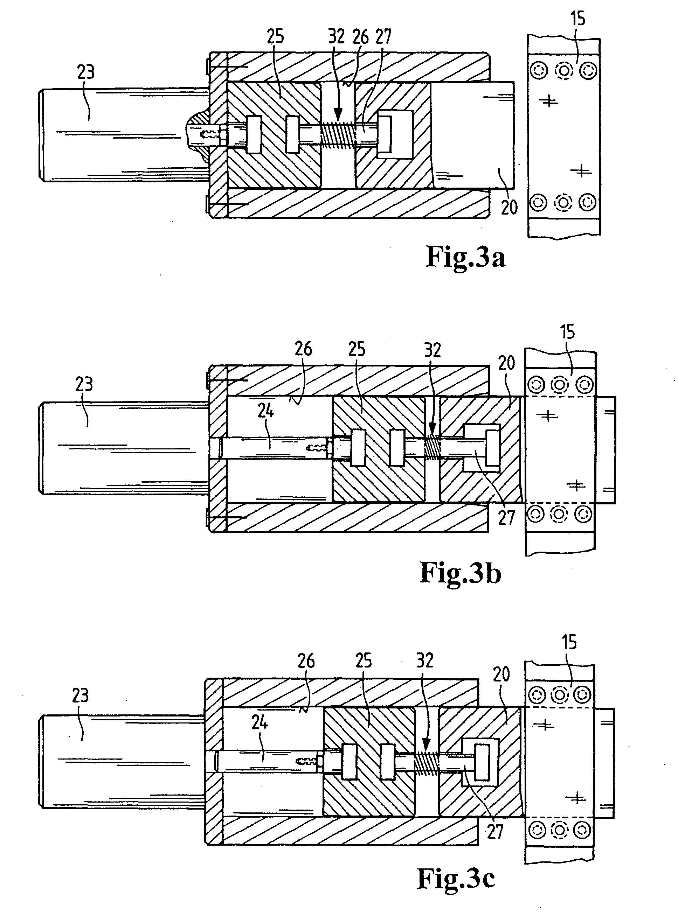

Figur 3 zeigt in drei Stufen in jeweils einer Draufsicht die Wirkungsweise des Schweißstempeleinsatzes.

In Figur 3a ist der Schweißstempeleinsatz 20 von der Aufnahme 15 entkoppelt, das heißt er befindet sich in seiner linksseitigen Anschlagstellung. Durch den Elektromotor oder anderen Antriebselementen ist damit die Verbindung zwischen Aufnahme 15 und Schweißstempelträger 22 aufgehoben. Ein Formteil kann eingelegt und entnommen werden. Der Schweißstempelträger 22 kann sich nach oben bewegen.

Figur 3b zeigt den Schweißstempeleinsatz 20 in seiner rechtsseitigen Position, in welcher er mit der Aufnahme 15 verbunden ist. Die Zug-/Schubstange 27 wirkt eine Kraft ,ausgehend von dem Elektromotor 23 aus, welche zu einer starren Verbindung zwischen Schweißstempeleinsatz und Aufnahme 15 führt.

Figur 3c ist die Motorstellung bei welcher die Zug-/Schubstange 27 axial entkoppelt von dem Schweißstempeleinsatz 20 ist und eine Vibrationsbewegung des Schweißstempeleinsatzes erfolgen kann. Nach dem Schweißvorgang wird der Schweißstempeleinsatz 20 wieder zurückgezogen und gelangt in die gemäß Figur 3a dargestellte Ausgangsstellung.

## Patentansprüche

1. Einrichtung zum Verschweißen wenigstens zweier thermoplastischer Formteile mit einer Aufnahme für das erste thermoplastische Formteil einer weiteren Aufnahme für das zweite thermoplastische Formteil, wobei die weitere Aufnahme mittels eines Schwingkopfes in Schwingung versetzt wird zum Vibrationsschweißen der beiden thermoplastischen Formteile, **dadurch gekennzeichnet, dass** die weitere Aufnahme eine Fixiereinheit aufweist welche einen Schweißstempel aufnimmt der sich über einen Teilbereich der zu verschweißenden Fläche erstreckt.

2. Einrichtung nach Anspruch 1, **dadurch gekennzeichnet, dass** der Schweißstempel über eine Lagervorrichtung beweglich an der ersten Aufnahme angeordnet ist.

3. Einrichtung nach Anspruch 2, **dadurch gekennzeichnet, dass** die Lagervorrichtung eine Einrichtung zum Verschieben des Schweißstempels aufweist, insbesondere einen Linearantrieb, wobei dieser Linearantrieb den Schweißstempel zum verschweißen der beiden thermoplastischen Formteile der Fixiereinheit zuführt und zum Öffnen der beiden Aufnahmen, dass heißt zur Entnahme und zur Entnahme der thermoplastischen Formteile aus der Fixiereinheit entfernt.

4. Einrichtung nach Anspruch 3, **dadurch gekennzeichnet, dass** der Linearantrieb ein Elektromotor mit einer Antriebsspindel oder ein hydraulischer oder pneumatischer Antrieb ist.

5. Einrichtung nach Anspruch 2, **dadurch gekennzeichnet, dass** der Schweißstempel axialtolerant mit der Lagervorrichtung verbunden ist.

6. Einrichtung nach einem der vorherigen Ansprüche, **dadurch gekennzeichnet, dass** die Fixiereinheit eine Kegelbohrung/Kegelöffnung zur Aufnahme des im Bereich der Verbindung mit der Fixiereinheit kegelförmig ausgestalteten Schweißstempel aufweist.
